(19) Europäisches Patentamt
European Patent Office
Office européen des brevets

(11) EP 4 576 311 A1

(12) EUROPEAN PATENT APPLICATION
published in accordance with Art. 153(4) EPC

(43) Date of publication:
25.06.2025 Bulletin 2025/26

(21) Application number: 23872281.3

(22) Date of filing: 26.09.2023

(51) International Patent Classification (IPC):
H01M 10/06 (2006.01)    H01M 4/14 (2006.01)
H01M 4/62 (2006.01)    H01M 50/417 (2021.01)
H01M 50/489 (2021.01)

(52) Cooperative Patent Classification (CPC):
H01M 4/14; H01M 4/62; H01M 10/06;
H01M 50/417; H01M 50/489; Y02E 60/10

(86) International application number:
PCT/JP2023/034796

(87) International publication number:
WO 2024/071058 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 JP 2022153991

(71) Applicant: GS Yuasa International Ltd.
Kisshoin, Minami-ku,
Kyoto-shi, Kyoto 601-8520 (JP)

(72) Inventors:
• ANDO Kazunari
  Kosai-shi, Shizuoka 431-0452 (JP)
• ITO Etsuko
  Kosai-shi, Shizuoka 431-0452 (JP)

(74) Representative: Isarpatent
Patent- und Rechtsanwälte
Barth Hassa Peckmann & Partner mbB
Friedrichstraße 31
80801 München (DE)

(54) LEAD STORAGE BATTERY

(57)    Disclosed is a lead-acid battery including: a positive electrode plate; a negative electrode plate; a separator interposed between the positive electrode plate and the negative electrode plate; and an electrolyte solution, in which the positive electrode plate includes a positive electrode material, the negative electrode plate includes a negative electrode material, the negative electrode material includes a Bi element, a content of the Bi element in the negative electrode material is 100 ppm or more and 300 ppm or less on a mass basis, the separator includes a crystalline region and an amorphous region, a ratio R represented by $A_1/(A_1 + A_2)$ is 0.50 or more in an X-ray diffraction spectrum of the separator, $A_1$ is an area of a first diffraction peak having a maximum peak height among diffraction peaks corresponding to the crystalline region, and $A_2$ is an area of a second diffraction peak having a second highest peak height among the diffraction peaks corresponding to the crystalline region.

Fig. 1

**Description**

TECHNICAL FIELD

The present invention relates to a lead-acid battery.

BACKGROUND ART

Lead-acid batteries are in use for various applications, including automotive and industrial applications. The lead-acid battery includes a positive electrode plate, a negative electrode plate, a separator interposed between these electrode plates, and an electrolyte solution.

Patent Document 1 proposes "a separator for an energy storage device having a cross-sectional crystal orientation of 0.85 or more".

Patent Document 2 proposes "a nonaqueous electrolyte secondary battery separator including a porous film containing, as a main component, polyethylene having a weight average molecular weight of 500,000 or more, wherein an area ratio $R = I(110)/(I(110) + I(200))$, which is defined by an area $I(110)$ of a diffraction peak of a (110) plane and an area $I(200)$ of a diffraction peak of a (200) plane in a case where the porous film is irradiated with an X-ray from a thickness direction, is 0.90 or more, and a film thickness is 14 $\mu$m or less".

Patent Document 3 proposes "a lead-acid battery including: an element in which a plurality of positive electrode plates each having a positive active material containing lead dioxide and a plurality of negative electrode plates each having a negative active material containing metal lead are alternately stacked with a separator interposed therebetween, wherein the element is immersed in an electrolyte solution to form a cell, the positive electrode plate after formation has a flatness of 4.0 mm or less, and a content of bismuth in the negative active material is 0.5 ppm or more and 250 ppm or less".

Patent Document 4 proposes a "lead-acid battery including: a negative electrode plate including a negative grid not containing Sb; a positive electrode plate including a positive grid not containing Sb and having a layer containing Sb in an amount of 0.01 to 0.20% by weight of a positive active material amount on at least a part of a surface in contact with the positive active material; and a separator inserted in between the positive electrode plate and the negative electrode plate, in which the entire surfaces of the positive electrode plate and the negative electrode plate are immersed in an electrolyte solution, and the negative active material contains Bi in an amount of 0.02 to 0.10% by weight with respect to a negative active material amount".

Patent Document 5 proposes "a lead-acid battery including a negative electrode plate including a non-Sb-based negative electrode grid and a negative active material containing 0.1 to 3% by weight of Ba and 0.1 to 2.5% by weight of graphite or carbon, wherein the negative active material contains at least one selected from the group of Sb, Sn, Bi, Zn, Se, Mn, Ca, Mg, and Sr".

PRIOR ART DOCUMENT

PATENT DOCUMENTS

Patent Document 1: WO 2020/067161 A
Patent Document 2: JP-A-2017-103044
Patent Document 3: JP-A-2021-163612
Patent Document 4: JP-A-2006-079973
Patent Document 5: JP-A-2003-142085

SUMMARY OF THE INVENTION

PROBLEMS TO BE SOLVED BY THE INVENTION

Recent lead-acid batteries, particularly, lead-acid batteries for vehicles controlled by idling stop/start (ISS) are used under conditions different from those of conventional lead-acid batteries for starter. Such lead-acid batteries are used, for example, in a partial state of charge (PSOC). When the lead-acid battery is continuously discharged without being charged from the PSOC while an engine is stopped, the depth of discharge (hereinafter, referred to as "DOD") becomes deeper. Thus, the conditions of a charge-discharge cycle test (PSOC cycle test) assuming use in the PSOC are becoming increasingly strict. Thus, the conventional lead-acid battery for starter and the lead-acid battery for vehicles controlled by the ISS are different lead-acid batteries each designed for dedicated use. However, lead-acid batteries that can be used for both vehicles for starter and vehicles controlled by the ISS have been strongly demanded from the aftermarket (repair) market. Such a lead-acid battery is required to achieve both charge-discharge cycle performance assumed to be used in the PSOC and light-load charge-discharge cycle performance assumed to be used for starter.

One of the factors of deterioration of lead-acid batteries due to use in deep DOD is a decrease in charge acceptability of a negative electrode material.

Adding Bi to the negative electrode material improves the charge acceptability of a negative electrode, and the life in the PSOC cycle test is improved.

On the other hand, a negative electrode potential during charging is shifted to a noble side by the action of Bi. As a result, in a light-load life test (for example, 75°C JIS light-load life test (2 min method)), even if the lead-acid battery approaches a full charge state during constant voltage charging, a charge current is less likely to droop, and the charge current continues to flow while generating hydrogen. Correspondingly, oxygen is also generated on the positive electrode. That is, in the light-load life test, the lead-acid battery tends to be in an overcharged state. Oxygen generated on the positive electrode attacks a constituent material of the separator to cause oxidation degradation of the separator. Thus, cracks or breaks occur in the separator, and the positive electrode material and the negative electrode material come into contact with each other, so that a short circuit occurs.

MEANS FOR SOLVING THE PROBLEMS

An aspect of the present disclosure relates to a lead-acid battery including: a positive electrode plate; a negative electrode plate; a separator interposed between the positive electrode plate and the negative electrode plate; and an electrolyte solution, in which the positive electrode plate includes a positive electrode material, the negative electrode plate includes a negative electrode material, the negative electrode material includes a Bi element, a content of the Bi element in the negative electrode material is 100 ppm or more and 300 ppm or less on a mass basis, the separator includes a crystalline region and an amorphous region, a ratio R represented by $A_1/(A_1 + A_2)$ is 0.50 or more in an X-ray diffraction spectrum of the separator, $A_1$ is an area of a first diffraction peak having a maximum peak height among diffraction peaks corresponding to the crystalline region, and $A_2$ is an area of a second diffraction peak having a second highest peak height among the diffraction peaks corresponding to the crystalline region.

ADVANTAGES OF THE INVENTION

According to the present disclosure, it is possible to provide a lead-acid battery excellent in PSOC cycle life and light-load life.

BRIEF DESCRIPTION OF THE DRAWING

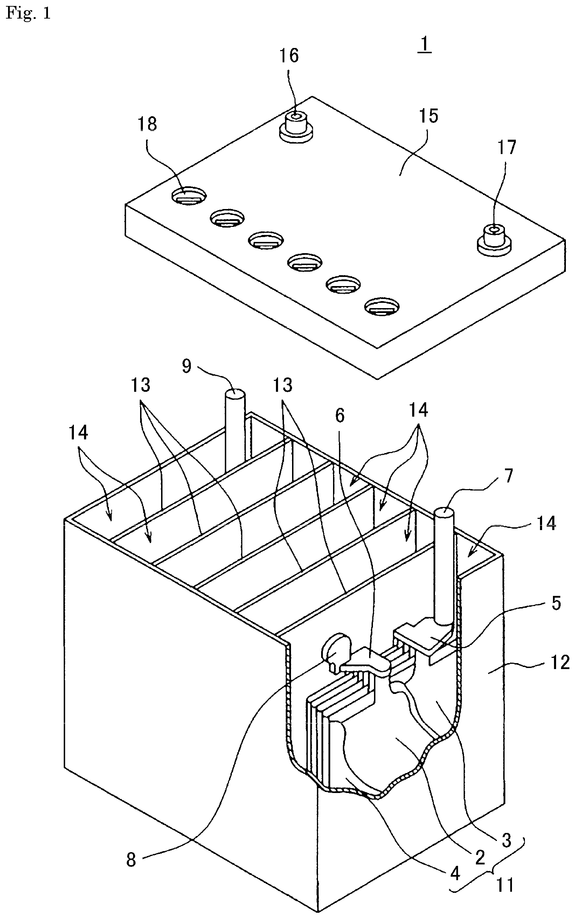

Fig. 1 is a partially cutaway perspective view showing an appearance and an internal structure of a lead-acid battery according to an embodiment of the present invention.

MODE FOR CARRYING OUT THE INVENTION

Hereinafter, embodiments of the present disclosure will be described with reference to examples, but the present disclosure is not limited to the examples described below. In the description below, specific numerical values and materials may be shown as examples, but the other numerical values and the other materials may be used as long as the effects of the present disclosure are obtained. In this specification, the expression "numerical value A to numerical value B" includes the numerical value A and the numerical value B, and can be read as "numerical value A or more and numerical value B or less". In the following description, when the lower limit and the upper limit of numerical values related to specific physical properties, specific conditions are exemplified, and the like, any of the exemplified lower limits and any of the exemplified upper limits can be predeterminately combined unless the lower limit is equal to or more than the upper limit. When a plurality of materials are exemplified, one of the materials may be selected and used alone, or two or more of the materials may be used in combination.

The present disclosure encompasses a combination of matters recited in two or more claims predeterminately selected from a plurality of claims recited in the appended claims. That is, as long as no technical contradiction arises, matters recited in two or more claims predeterminately selected from a plurality of claims recited in the appended claims can be combined.

In the present specification, the up-down direction of the lead-acid battery or constituent elements (such as plate, container, and separator) of the lead-acid battery means the up-down direction in the vertical direction of the lead-acid battery disposed in a used state. Each of the positive electrode plate and the negative electrode plate includes a lug part for connecting to an external terminal. For example, the lug part is provided above the plate so as to protrude upward in flooded-type batteries.

Although the lead-acid battery according to the present disclosure may be a valve regulated battery (VRLA type battery), a flooded-type battery (vent type battery) is preferable in that the action and effect due to a Bi element can be effectively utilized.

The lead-acid battery includes a positive electrode plate, a negative electrode plate, a separator interposed between the positive electrode plate and the negative electrode plate, and an electrolyte solution. The electrolyte solution contains sulfuric acid. When sulfate ions move between the positive and negative electrode plates and the electrolyte solution, charging and discharging progress. During discharging, sulfate ions move to the positive electrode plate and the negative electrode plate, so that the density of the electrolyte solution decreases. During charging, sulfate ions move from the positive electrode plate and the negative electrode plate into the electrolyte solution, so that the density of the electrolyte solution increases.

The positive electrode plate, the negative electrode plate, and the separator constitute the element. The element constitutes a cell together with the electrolyte solution. One element constitutes one cell. The lead-acid battery includes one or more cells by including one or more electrode groups. The number of positive electrode plates and negative electrode plates included in one element is not particularly limited. The element included in the lead-acid battery according to the present disclosure includes, for example, 12 or more positive electrode plates and negative electrode plates in total. The plurality of elements are usually stored in individual cell chambers and connected to each other in series.

The positive electrode plate includes the positive electrode material. The positive electrode material contains at least lead dioxide during charging and at least lead sulfate during discharging as a positive active material that exhibits a capacity through a redox reaction.

The negative electrode plate contains a negative electrode material. The negative electrode material contains at least lead during charging and at least lead sulfate during discharging as a negative active material that exhibits a capacity through a redox reaction

(1) A lead-acid battery according to an embodiment of the present disclosure includes: a positive electrode plate; a negative electrode plate; a separator interposed between the positive electrode plate and the negative electrode plate; and an electrolyte solution, in which the positive electrode plate includes a positive electrode material, the negative electrode plate includes a negative electrode material, the negative electrode material includes a Bi element, a content of the Bi element in the negative electrode material is 100 ppm or more and 300 ppm or less on a mass basis, the separator includes a crystalline region and an amorphous region, a ratio R represented by $A_1/(A_1 + A_2)$ is 0.50 or more in an X-ray diffraction spectrum of the separator, $A_1$ is an area of a first diffraction peak having a maximum peak height among diffraction peaks corresponding to the crystalline region, and $A_2$ is an area of a second diffraction peak having a second highest peak height among the diffraction peaks corresponding to the crystalline region.

The lead-acid battery according to an embodiment of the present invention can improve the PSOC cycle life and the light-load life.

(2) In the lead-acid battery according to (1) above, the ratio R may be 0.60 or more.

According to the lead-acid battery according to (2) above, a more excellent life is obtained particularly in the light-load life test.

(3) In the lead-acid battery according to (1) or (2) above, the ratio R may be 1.0 or less.

The separator included in the lead-acid battery according to (3) above is not only easy to manufacture, but also less likely to be oxidized and degraded and excellent in flexibility. Therefore, cracks or breaks of the separator are further less likely to occur.

(4) In the lead-acid battery according to any one of (1) to (3) above, the separator may include polyolefin containing an ethylene unit, the first diffraction peak may correspond to a (110) plane of the crystalline region, and the second diffraction peak may correspond to a (200) plane of the crystalline region.

The separator included in the lead-acid battery according to (4) above is relatively easy to adjust the ratio R, and the resistance to oxidation degradation and strength of the separator can be easily controlled.

(5) In the lead-acid battery according to any one of (1) to (4) above, the separator may have a thickness of 0.10 mm or more and 0.30 mm or less.

The lead-acid battery according to (5) above is not only excellent in each life performance can but also suppress the resistance of the separator to a low level. The separator has high resistance to oxidation degradation and high strength.

(6) In the lead-acid battery according to any one of (1) to (5) above, a ratio of a mass of the positive electrode material to a mass of the negative electrode material may be 1.2 or more and 1.4 or less.

The lead-acid battery according to (6) above can reduce a use amount of the negative electrode material while having further excellent in light-load life performance, and is suitable for weight reduction and cost reduction.

(7) The lead-acid battery according to any one of (1) to (6) above may be used for a vehicle controlled by ISS. This is because the lead-acid battery mounted on a vehicle controlled by ISS has a great need to improve both the PSOC cycle life and the light-load life.

The negative electrode material according to the present disclosure contains a predetermined amount of Bi (bismuth) element. The Bi element has an action of improving charge acceptability of the negative electrode material. Such an action is considered to be caused by, for example, an action of reducing hydrogen generation overvoltage by the Bi element. A negative electrode potential during charging is shifted to a noble side by the action of Bi. As a result, the charge acceptability of a negative electrode is improved, and the life in a PSOC cycle test is improved.

On the other hand, the lead-acid battery including the negative electrode plate including the negative electrode material containing a predetermined amount of Bi element tends to be in an overcharged state in the light-load life test. This is because even if the lead-acid battery approaches a full charge state during constant voltage charging in the light-load life test, a charge current is less likely to droop, and the charge current continues to flow while generating hydrogen. As a result, oxygen is generated on the positive electrode. Oxygen generated on the positive electrode causes oxidation degradation of the separator. The oxidized and degraded separator is cracked or broken, causing an internal short-circuit between the positive electrode and the negative electrode, and the lead-acid battery reaches its life.

On the other hand, oxidation resistance of the separator is improved by controlling a degree of crystallinity of the constituent material of the separator indicated by a predetermined index within a high range. As a result, oxidation degradation of the separator due to oxygen attack is suppressed, a short circuit due to cracks or breaks of the separator hardly occurs, and the life in the light-load life test is improved. It is possible to achieve both the life improvement in the PSOC cycle test and the life improvement in the light-load life test.

The content of the Bi element in the negative electrode material needs to be limited to 100 ppm or more and 300 ppm or less on a mass basis. When the content of the Bi element is less than 100 ppm on a mass basis, the charge current tends to rapidly attenuate when the lead-acid battery approaches the full charge state in constant voltage charging. That is, the action of improving the charge acceptability of the negative electrode material by the Bi element cannot be sufficiently obtained.

On the other hand, an oxygen generation amount on the positive electrode relatively increases as the content of the Bi element in the negative electrode material increases. Thus, when the content of the Bi element in the negative electrode material is excessively increased, sufficiently protecting the separator from oxygen attack is difficult even if the degree of crystallinity of the separator is increased. When the content of the Bi element is more than 300 ppm on a mass basis, oxidation degradation of the separator cannot be sufficiently suppressed in the light-load life test, and the life of the lead-acid battery tends to be shortened. The content of the Bi element in the negative electrode material may be 100 ppm or more or 150 ppm or more on a mass basis. The content of the Bi element in the negative electrode material may be 250 ppm or less or 230 ppm or less on a mass basis. A preferable range of the content of the Bi element in the negative electrode material may be, for example, 100 ppm or more and 250 ppm or less, or 150 ppm or more and 230 ppm or less on a mass basis.

The degree of crystallinity of the constituent material of the separator is represented by the following index (ratio R). The ratio R is represented by $R = A_1/(A_1 + A_2)$ in an X-ray diffraction (XRD) spectrum of the separator including the crystalline region and the amorphous region. $A_1$ is the area of the diffraction peak (first diffraction peak) having the maximum peak height among the diffraction peaks corresponding to the crystalline region. $A_2$ is the area of the diffraction peak (second diffraction peak) having the second highest peak height among the diffraction peaks corresponding to the crystalline region.

The ratio R indicates a degree of crystallinity of the separator. The larger the ratio R is, the higher the crystallinity of the separator is, and the separator is less likely to be oxidized and degraded. The strength (for example, piercing strength) of the separator itself can be improved by increasing the crystallinity of the separator. That is, it is possible to suppress an internal short-circuit due to oxidation degradation of the separator without increasing the thickness of the separator, in other words, without increasing the resistance of the separator.

In the present disclosure, by setting the ratio R to 0.50 or more, further 0.60 or more, high strength of the separator can be secured while suppressing the increase in resistance of the separator. The ratio R is preferably 1.0 or less, and more preferably 0.90 or less. In this case, it is easy to ensure flexibility of the separator, and it is easy to manufacture the separator.

A ratio of the mass of the positive electrode material to the mass of the negative electrode material (hereinafter, the ratio is also referred to as the "Mp/Mn ratio") is, for example, 1.2 or more and may be 1.3 or more. The Mp/Mn ratio may be 1.4 or less. A preferable range of the Mp/Mn ratio is, for example, 1.2 or more and 1.4 or less, and may be 1.3 or more and 1.4 or less. The mass of the positive electrode material is the mass of the positive electrode material included in one positive electrode plate. The mass of the negative electrode material is the mass of the negative electrode material included in one negative electrode plate. Increasing the Mp/Mn ratio to 1.2 or more means reducing an amount of the negative electrode material used. In other words, the weight of the lead-acid battery can be reduced by increasing the Mp/Mn ratio to 1.2 or more, and the cost can be reduced.

On the other hand, when the Mp/Mn ratio is 1.2 or more, the load on the negative electrode plate considerably increases, and the charge acceptability is likely to be deteriorated. As a result, in the light-load life test, the charge current decreases at a relatively early stage. However, when the negative electrode material contains a predetermined amount of Bi element, a charge reaction progresses more uniformly over the entire negative electrode plate, and the degree of crystallinity of the separator is high, so that it is possible to provide a lead-acid battery having excellent light-load life performance even when the Mp/Mn ratio is increased to 1.2 or more.

The lead-acid battery according to the present disclosure is suitable for a vehicle controlled by idling stop/start (ISS). A lead-acid battery mounted on a vehicle controlled by ISS is often used in the PSOC, and an excellent PSOC cycle life is required. In addition, excellent light-load life performance is also required. Pressure is easily applied to the element in a stacking direction, and the negative electrode plate and the positive electrode plate are easily brought into contact with each other. In this case, there is a great need to suppress the internal short-circuit.

Hereinafter, the separator and the lead-acid battery of the embodiment of the present invention will be described more specifically with reference to the drawings. However, the present invention is not limited to the following embodiment.

Examples of the constituent elements of the lead-acid battery will be described below.

(Positive electrode plate)

The positive electrode plate includes a positive current collector and a positive electrode material. The positive electrode material is held by the positive current collector. The positive electrode material is a portion obtained by removing the positive current collector from the positive electrode plate. A sticking member such as a conductive layer, a mat, or a pasting paper may be stuck to the positive electrode plate. The sticking member is used integrally with the positive electrode plate and is thus included in the constituent element of the positive electrode plate. When the positive electrode plate includes the sticking member, the positive electrode material is a portion obtained by removing the positive current collector and the sticking member from the positive electrode plate.

The positive electrode current collector may be formed by casting lead (Pb) or a lead alloy, or formed by processing a lead sheet or a lead alloy sheet. The processing method may be, for example, expanding processing or punching processing. By using a grid-like current collector as the positive current collector, the positive electrode material is easily supported.

As a lead alloy used for the positive current collector, a Pb-Ca-based alloy and a Pb-Ca-Sn-based alloy excellent in corrosion resistance and mechanical strength are preferable. The positive current collector may include metal layers having different compositions, and a single metal layer or a plurality of metal layers may be provided.

The positive electrode material contains a positive active material that exhibits a capacity through a redox reaction. The positive active material contains lead dioxide, lead sulfate, and the like. The positive electrode material may optionally contain an additive. The additive may include a reinforcing material, an antimony compound, and the like. For example, an inorganic fiber, an organic fiber, or the like can be cited as the reinforcing material.

A non-formed positive electrode plate is obtained by curing and drying the positive current collector and the positive electrode paste filled in the positive current collector. The positive electrode paste is prepared by mixing a mixture containing lead powder, water, and sulfuric acid. The positive electrode paste may optionally contain an additive. The additive may include a reinforcing material, an antimony compound, and the like. Such a positive electrode plate is also referred to as a paste-type positive electrode plate.

The positive electrode plate is obtained by forming the non-formed positive electrode plate. The formation may be performed by immersing the element including the non-formed positive electrode plate in the electrolyte solution containing sulfuric acid in the container of the lead-acid battery and charging the element. The formation may be performed before the lead-acid battery or the element is assembled.

(Negative electrode plate)

The negative electrode plate includes a negative current collector and a negative electrode material. The negative electrode material is held by the negative current collector. The negative electrode material is a portion obtained by removing the negative current collector from the negative electrode plate. A sticking member such as a conductive layer, a mat, or a pasting paper may be stuck to the negative electrode plate. The sticking member is included in a constituent element of the negative electrode plate. When the negative electrode plate includes the sticking member, the negative electrode material is a portion obtained by removing the negative current collector and the sticking member from the negative electrode plate.

The negative current collector may be formed by casting lead (Pb) or a lead alloy, or formed by processing a lead sheet or a lead alloy sheet. The processing method may be expanding processing or punching processing. When a grid-like current collector is used as the negative current collector, it is easy to support the negative electrode material.

At least one of the positive current collector and the negative current collector may be formed by expanding or punching. In a plate using a current collector (expanded grid) formed by expanding, the plate interferes with a manufacturing apparatus in a manufacturing process, and a corner portion is likely to be deformed. Such corner portions of the plate are likely to cause a short circuit that cuts into the separator. The separator according to the present disclosure has relatively high strength and is also excellent in that such a short circuit can be suppressed.

The lead alloy used for the negative electrode current collector may be any of a Pb-Sb-based alloy, a Pb-Ca-based alloy, and a Pb-Ca-Sn-based alloy. The lead alloy used for the negative current collector may contain, as an additive element, at least one selected from the group consisting of Ba, Ag, Al, Bi, As, Se, Cu, and the like. The negative current collector may include metal layers having different compositions, and a single metal layer or a plurality of metal layers may be provided.

The negative electrode material contains a negative active material that exhibits a capacity through a redox reaction. The negative active material contains lead, lead sulfate, and the like. The negative electrode material contains a Bi element in an amount of 100 ppm or more and 300 ppm or less on a mass basis. The negative electrode material may optionally contain other additives. The additive may include an organic expander, a carbonaceous material, and barium sulfate, and the like.

<Analysis of content of Bi element>

For the analysis of the content of the Bi element in the negative electrode material, the negative electrode plate taken out from the unused lead-acid battery or the lead-acid battery in the full charge state at the initial stage of use is used. The negative electrode plate taken out of the lead-acid battery is washed and dried prior to the analysis or the measurement.

After the negative electrode plate taken out from the lead-acid battery is washed with water and dried, the negative electrode material is collected, and a sample of the pulverized negative electrode material is provided. A solution obtained by mixing nitric acid and water at a volume ratio of 1:3 is heated to about 100°C to dissolve the sample. Thereafter, the Bi content is determined by performing ICP (Inductively Coupled Plasma) emission spectrometry on a solution obtained by filtering insoluble matters.

In the present specification, the full charge state of the flooded-type lead-acid battery is defined by the definition of JIS D 5301:2019. More specifically, the following state is the full charge state: the lead-acid battery is charged with a current $2I_{20}$ that is twice a 20 hour rate current $I_{20}$ in a water bath at 25°C $\pm$ 2°C until a terminal voltage (V) during charge measured every 15 minutes or an electrolyte solution density subjected to temperature correction to 20°C exhibits a constant value at three significant digits continuously three times. The 20 hour rate current $I_{20}$ is a current (A) of 1/20 of a numerical value of Ah described in the rated capacity. The numerical value described as the rated capacity is a numerical value in which the unit is Ah (ampere-hour). The unit of the current set based on the numerical value indicated as the rated capacity is A (amperes). In the case of a valve regulated lead-acid battery, the full charge state is a state where the lead-acid battery is subjected to constant current constant voltage charge of 2.67 V/cell (16.00 V in a lead-acid battery having a rated voltage of 12 V) at a current of $5I_{20}$ that is five times the 20 hour rate current $I_{20}$ in an air tank at 25°C$\pm$2°C, and charging is terminated when a total charging time reaches 24 hours.

The lead-acid battery in the full charge state is a lead-acid battery obtained by charging a formed lead-acid battery to the full charge state. The timing of charging the lead-acid battery to the full charge state may be immediately after the formation or after a lapse of time from the formation as long as the full charge is performed after the formation. For example, after formation, the lead-acid battery in use (preferably in the initial stage of use) may be charged.

In the present specification, the battery at the initial stage of use is a battery that has not been used for a long time and has hardly degraded.

Examples of the organic expander include lignin, lignin sulfonic acid, and a synthetic organic expander. The synthetic organic expander may be, for example, a formaldehyde condensate of a phenol compound. The organic expander may be used singly or in combination of two or more kinds thereof. The content of the organic expander in the negative electrode material is, for example, 0.01% by mass or more and 1% by mass or less.

As the carbonaceous material, carbon black, artificial graphite, natural graphite, hard carbon, soft carbon, and the like may be used. One kind of carbonaceous material may be used singly, or two or more kinds thereof may be used in combination. The content of the carbonaceous material in the negative electrode material is, for example, 0.1% by mass or more and 3% by mass or less.

The content of barium sulfate in the negative electrode material is, for example, 0.1% by mass or more and 3% by mass or less.

A non-formed negative electrode plate is obtained by curing and drying the negative current collector and the negative electrode paste filled in the negative current collector. The curing is preferably performed in an atmosphere of a temperature higher than room temperature and a high humidity. The negative electrode paste is prepared by mixing a mixture containing lead powder, water, and sulfuric acid. The negative electrode paste may optionally contain an additive. The additive may include a bismuth compound (for example, bismuth sulfate), an organic expander, a carbonaceous material, barium sulfate, and the like.

The negative electrode plate is obtained by forming the non-formed negative electrode plate. The formation may be performed by immersing the element including the non-formed negative electrode plate in the electrolyte solution containing sulfuric acid in the container of the lead-acid battery and charging the element. The formation may be performed before the lead-acid battery or the element is assembled. The negative active material in the charge state contains spongy lead.

(Separator)

The separator is a porous membrane having pores, and may include a conductive layer disposed on a surface of the porous membrane. Although the conductive layer may be disposed on each of two principal surfaces of the porous membrane, it is sufficient that the conductive layer is disposed on the principal surface on the negative electrode plate side. Hereinafter, when the separator includes the conductive layer, the separator refers to a porous membrane excluding the conductive layer, and when the separator does not include the conductive layer, the separator refers to the porous membrane.

From the viewpoint of suppressing oxidation of the porous membrane by oxygen gas, the index (ratio R) of the degree of crystallinity of the constituent material of the separator may be, for example, 0.50 or more, 0.60 or more, or 0.70 or more. From the viewpoint of securing higher oxidation resistance of the separator, the ratio R may be 0.75 or more. When the ratio R is 0.90 or less, the flexibility of the separator can be easily ensured, and the separator can be easily manufactured. The ratio R may be 0.85 or less or 0.80 or less. A preferable range of the ratio R is, for example, 0.50 or more and 1.0 or less, and may be 0.50 or more and 0.90 or less, 0.60 or more and 0.90 or less, or 0.75 or more and 0.90 or less.

The area of the diffraction peak is determined by fitting the diffraction peak by the crystalline region in the XRD spectrum of the separator. Using the obtained area $A_1$ of the first diffraction peak and the obtained area $A_2$ of the second diffraction peak, the ratio R is obtained from the above formula.

The higher the ratio R, the higher the crystallinity of the separator, and the higher the oxidation resistance of the separator. The oxidation resistance is also enhanced by adding oil to the separator. However, the oil may increase the resistance of the separator. Thus, it is desirable to enhance the crystallinity of the separator to enhance the oxidation resistance of the separator.

When the separator contains oil, the content of the oil in the separator is preferably 11% by mass or more, and may be 13% by mass or more. The content of the oil in the separator is preferably 18% by mass or less. A preferable range of the content of the oil in the separator may be, for example, 11% by mass or more and 18% by mass or less, or 13% by mass or more and 18% by mass or less. When the oil content is in such a range, the effect of suppressing oxidation degradation of the separator is further enhanced. The resistance of the separator can be suppressed to be relatively low.

The oil refers to a hydrophobic substance that is liquid at room temperature (a temperature greater than or equal to 20°C and less than or equal to 35°C) and is separated from water. The oil includes naturally occurring oil, mineral oil, synthetic oil, and the like, and mineral oil, synthetic oil, and the like are preferable. For example, paraffin oil, silicone oil, or the like can be preferably used. The separator may contain one oil or two or more oils in combination.

In the separator, a bending degree of the pore is preferably 5 or more. In this case, the strength of the separator can be further increased. The bending degree of the pores of the separator may be 20 or more. The bending degree of the pore is, for example, 150 or less, and may be 70 or less.

The bending degree of the pore is determined by a mercury intrusion method. The bending degree is expressed by the following formula.

[Mathematical formula 1]

$$\xi = \sqrt{\frac{\rho}{24K(1 + \rho V_{tot})} \times X}$$

(In the formula, $\xi$: bending degree, $\rho$: density, K is permeability, $V_{tot}$: total pore volume, and X: differential pore distribution.)

The separator includes a crystalline region in which molecules of a constituent material of the separator are relatively regularly arranged (that is, the alignment property is high), and an amorphous region having a low alignment property. Thus, in the XRD spectrum of the separator, a diffraction peak due to the crystalline region is observed, and scattered light due to the amorphous region is observed as a halo. When the ratio R is 0.50 or more, more excellent life performance can be obtained in the PSOC cycle test.

Hereinafter, the porous membrane having the ratio R of 0.50 or more is also referred to as "porous membrane (F)". The polymer material (hereinafter, also referred to as a base polymer) included in the porous membrane (F) contains a crystalline polymer. The crystalline polymer includes, for example, polyolefin. The polyolefin is a polymer containing at least an olefin unit (monomer unit derived from olefin).

The polyolefin included in the porous membrane (F) more preferably contains polyolefin containing at least an ethylene unit. In such a porous membrane (F), it is relatively easy to adjust the ratio R.

When the porous membrane (F) contains polyolefin containing at least an ethylene unit, the first diffraction peak may correspond to a (110) plane by the crystalline region, and the second diffraction peak may correspond to a (200) plane by the crystalline region. The diffraction peak corresponding to the (110) plane of the crystalline region is observed in a range where $2\theta$ is 20° or more and 22.5° or less, and the diffraction peak corresponding to the (200) plane of the crystalline region is observed in a range where $2\theta$ is 23° or more and 24.5° or less. The halo in the amorphous region is observed in a range where $2\theta$ is 17° or more and 27° or less.

As the base polymer, polyolefin and another base polymer may be used in combination. For example, the ratio of the polyolefin in the entire base polymer contained in the porous membrane (F) is 50% by mass or more, may be 80% by mass or more, or be 90% by mass or more. The ratio of the polyolefin is, for example, 100% by mass or less. The base polymer may be configured of only the polyolefin. When the ratio of the polyolefin is as large as described above, the oxidation resistance of the porous membrane (F) tends to be low; however, even in such a case, high life performance can be secured by setting the ratio R within the above range.

Examples of the polyolefin include a homopolymer of an olefin, a copolymer containing different olefin units, and a copolymer containing the olefin unit and a copolymerizable monomer unit. The copolymer containing the olefin unit and the copolymerizable monomer unit may contain one kind or two or more kinds of olefin units. Moreover, the copolymer containing the olefin unit and the copolymerizable monomer unit may contain one kind or two or more kinds of copolymerizable monomer units. The copolymerizable monomer unit is a monomer unit derived from a polymerizable monomer that is not the olefin but can be copolymerized with the olefin.

For example, a polymer containing at least a $C_{2-3}$ olefin as a monomer unit can be cited as the polyolefin. At least one selected from the group consisting of ethylene and propylene can be cited as the $C_{2-3}$ olefin. As the polyolefin, for example, polyethylene, polypropylene, an ethylene-propylene copolymer, and the like are preferable. Among them, polyethylene and an ethylene-propylene copolymer, which are polyolefins containing at least an ethylene unit, are preferable. A polyolefin containing an ethylene unit and another polyolefin may be used in combination.

In order to enhance the oxidation resistance of the porous membrane (F), it is also desirable to provide a rib on a surface of the porous membrane (F) facing the positive electrode plate. Since a gap is formed between the porous membrane (F) and the positive electrode plate by the rib, the oxidation degradation of the porous membrane (F) is reduced.

For example, the porous membrane (F) including the rib includes a base and a rib erected from a surface of the base. The rib may be provided only on a surface on the positive electrode plate side of the base, or provided on both surfaces on the positive electrode plate side and the negative electrode plate side. The base of the porous membrane (F) is a portion of a constituent part of the porous membrane (F) excluding a protrusion such as the rib, and refers to a sheet-shaped portion that defines the outer shape of the porous membrane (F).

The height of the rib may be 0.05 mm or more. The height of the rib may be less than or equal to 1.2 mm. The height of the rib is a height (protrusion height) of a portion protruding from a surface of the base.

The height of the rib provided in a region opposite to the positive electrode plate in the region of the separator may be 0.4 mm or more. The height of the rib provided in the region opposite to the positive electrode plate in the region of the separator may be 1.2 mm or less.

The porous membrane (F) may contain inorganic particles. The inorganic particles do not contain a constituent material of the conductive layer disposed on the surface of the porous membrane (F).

For example, ceramic particles are preferable for the inorganic particles. For example, at least one selected from the group consisting of silica, alumina, and titania can be cited as the ceramic constituting the ceramic particle.

The content of the inorganic particles in the porous membrane (F) may be, for example, 40% by mass or more. The content of the inorganic particles is, for example, 80% by mass or less and may be 70% by mass or less. A preferable range of the content of the inorganic particles is, for example, 40% by mass or more and 80% by mass or less, and may be 40% by mass or more and 70% by mass or less.

At this time, the bending degree of the pores of the porous membrane is preferably 5 or more. Thus, the strength of the separator can be increased. The bending degree of the pores of the porous membrane may be 20 or more. The bending degree of the pore is, for example, 150 or less, and may be 70 or less. A preferable range of the bending degree is, for example, 5 or more and 150 or less, may be 5 or more and 70 or less, 20 or more and 70 or less, or 20 or more and 150 or less.

The bending degree can be controlled by, for example, the following method in a process for producing a porous membrane described later.

The affinity between the pore-forming additive and the base polymer of the porous membrane is adjusted.

The porous membrane contains inorganic particles, and the type and particle size of the inorganic particles are selected.

The functional group or atom present on a surface of the inorganic particle is adjusted.

The type and composition of the solvent at the time of extracting and removing the pore-forming additive, extraction conditions (extraction time, extraction temperature, rate of solvent supply, etc.), and the like are adjusted.

The separator may have a sheet shape, or a sheet bent in a bellows shape may be used as the separator. The separator may be formed into a bag shape. Either one of the positive electrode plate and the negative electrode plate may be wrapped in the bag-shaped separator.

The porous membrane (F) is obtained, for example, by extrusion molding a resin composition containing a base polymer and a pore-forming additive, into a sheet shape, stretching the resin composition, and then removing at least a portion of the pore-forming additive. The resin composition may contain a permeant (surfactant) and the like. By removing at least a portion of the pore-forming additive, micropores are formed in a matrix of the base polymer. The sheet-shaped porous membrane (F) is dried as necessary after removing the pore-forming additive. For example, the ratio R can be adjusted by adjusting at least one selected from the group consisting of a cooling rate of a sheet during extrusion molding, a stretch ratio during stretching, and the temperature during drying. For example, when the sheet is rapidly cooled at the time of extrusion molding, the stretch ratio is increased, or the temperature at the time of drying treatment is lowered, the ratio R tends to increase. The stretching may be performed by biaxial stretching, and is usually performed by uniaxial stretching. The sheet-shaped porous membrane (F) may be processed into a bag shape as necessary. When the separator in which the conductive layer is disposed on only one main surface of the porous membrane (F) is processed into a bag shape, the conductive layer is disposed on either the inner or outer surface of the bag.

In the separator including the rib, the rib may be formed when the resin composition is extrusion-molded into a sheet shape. The rib may be formed by pressing the sheet with a roller having a groove corresponding to each rib after molding the resin composition into a sheet shape or after removing the pore-forming additive.

Examples of the pore-forming additive include a liquid pore-forming additive that is liquid at room temperature (a temperature of 20°C or higher and 35°C or lower) and a solid pore-forming additive that is solid. The oil may be used as a liquid pore-forming additive. In this case, if a part of the oil remains, the porous membrane (F) containing the oil is obtained. When the oil is extracted and removed, the content of the oil in the porous membrane (F) is adjusted by adjusting the type and composition of the solvent, extraction conditions (extraction time, extraction temperature, rate of solvent supply, etc.), and the like. The pore-forming additive may be used singly or in combination of two or more kinds thereof. The oil and another pore-forming additive may be used in combination. The liquid pore-forming additive and the solid pore-forming additive may be used in combination. As the solid pore-forming additive, for example, a polymer powder can be used.

The amount of the pore-forming additive in the porous membrane (F) is, for example, 30 parts by mass or more per 100 parts by mass of the base polymer. The amount of the pore-forming additive is, for example, 60 parts by mass or less per 100 parts by mass of the base polymer.

For example, the surfactant as the permeant may be either an ionic surfactant or a nonionic surfactant. The surfactant may be used singly or in combination of two or more kinds thereof.

For example, the content of the permeant in the porous membrane (F) is 0.01% by mass or more, and may be 0.1% by mass or more. The content of the permeant in the porous membrane (F) may be 10% by mass or less.

The thickness of the separator may be 0.10 mm or more or 0.15 mm or more. The thickness of the separator may be 0.30 mm or less, 0.25 mm or less, or 0.20 mm or less. A preferable range of the thickness of the separator is, for example, 0.10 mm or more and 0.30 mm or less, 0.10 mm or more and 0.25 mm or less, and may be 0.15 mm or more and 0.20 mm or less. When the thickness of the separator is within the above range, higher strength of the separator can be secured. Since the resistance of the separator can be suppressed to be relatively low, excellent life performance is easily obtained.

<Analysis or measurement of separator>

(Preparation of separator)

For analysis or size measurement of the separator, an unused separator or a separator taken out from the lead-acid battery in the full charge state at the initial stage of use is used. The separator taken out of the lead-acid battery is washed and dried prior to the analysis or the measurement.

The separator taken out of the lead-acid battery is washed and dried in the following procedure. The separator taken out of the lead-acid battery is immersed in pure water for 1 hour to remove sulfuric acid in the separator. Subsequently, the separator is taken out of a liquid in which the separator has been immersed, left to stand in an environment of 25°C ± 5°C for 16 hours or more, and dried. For the separator having the porous membrane and the conductive layer, the conductive layer is removed by polishing, and then the XRD spectrum of the porous membrane is measured.

(XRD spectrum)

The XRD spectrum of the porous membrane is measured by irradiation with X-rays from a direction perpendicular to the surface of the porous membrane. A sample for measurement is prepared by processing a portion of the porous membrane facing the electrode material into a strip shape. In the porous membrane including the rib, the base portion is processed into a strip shape so as not to include the rib, thereby preparing the sample. Measurement and fitting of the XRD spectrum are performed under the following measurement conditions.

(Measurement conditions)

Measuring apparatus: RINT-TTR2, manufactured by Rigaku Corporation
Fitting: FT (step scan) method
Measurement angle range: 15 to 35°
Step width: 0.02°
Measurement speed: 5°/min
XRD data processing: XRD pattern analysis software (PDXL2, manufactured by Rigaku Corporation) was used.

(Thickness of separator and height of rib)

The thickness of the separator is obtained by measuring and averaging the thicknesses of the separator at five arbitrarily selected points in the sectional photograph of the separator. The thickness of the conductive layer of the separator having the conductive layer is also determined by the same method.
The height of the rib is determined by the following procedure. First, arbitrary ten positions of the rib are selected in the cross-sectional photograph of the separator. Next, the height of the rib (height from the surface of the base portion) is measured at each of the selected ten positions. Next, the height of the rib is determined by averaging the heights measured at the ten positions.

(Oil content in porous membrane)

The portion of the porous membrane facing the electrode material is processed into a strip shape to prepare a sample (hereinafter, referred to as a sample A). When the conductive layer is provided on the surface of the porous membrane, the conductive layer is removed by polishing to prepare a sample. In the separator including the rib, the base portion is processed into a strip shape so as not to include the rib, thereby preparing the sample A.
About 0.5 g of the sample A is collected, and accurately weighed to obtain the mass (m0) of the initial sample A. The weighed sample A is placed in a glass beaker having an appropriate size, and 50 mL of n-hexane is added. Subsequently, an oil content contained in the sample A is eluted into the n-hexane by applying ultrasonic waves to the sample A for about 30 minutes and all a beaker. Subsequently, the sample A is taken out of the n-hexane, dried at room temperature (temperature of 20°C or higher and 35°C or lower) in an atmosphere, and then weighed to obtain the mass (m1) of the sample A after oil removal. Then, the content of the oil is calculated by the following equation. The oil content is determined for the ten samples A, and the average value is calculated. The obtained average value is defined as the content of the oil in the porous membrane.

$$\text{Content of oil (\% by mass)} = 100 \times (m0 - m1)/m0$$

(Content of inorganic particles in porous membrane)

A part of the sample A prepared similarly to above is collected, accurately weighed, placed in a platinum crucible, and heated with a Bunsen burner until no white smoke comes out. Subsequently, in an electric furnace (550°C ± 10°C in oxygen stream), the obtained sample is heated for about 1 hour and incinerated, and the incinerated product is weighed. The ratio (percentage) of the mass of the incinerated product to a mass of the sample A is calculated, and set to the content (% by mass) of the inorganic particles. The content of the inorganic particles is determined for the ten samples A, and the average value is calculated. The obtained average value is defined as the content of inorganic particles (inorganic particles other than a carbon material) in the porous membrane.

(Content of permeant in porous membrane)

A part of the sample A prepared similarly to above is collected, accurately weighed, and then dried for greater than or equal to 12 hours at room temperature (temperature greater than or equal to 20°C and less than or equal to 35°C) under a reduced pressure environment lower than atmospheric pressure. The dried product is placed in a platinum cell and set in a thermogravimetric measuring apparatus, and the temperature is increased from room temperature to 800°C $\pm$ 1°C at a temperature rising rate of 10 K/min. An amount of weight loss when the temperature is increased from room temperature to 250°C $\pm$ 1°C is set to the mass of the permeant, and the ratio (percentage) of the mass of the permeant to the mass of the sample A is calculated and set to the content (% by mass) of the permeant. Q5000IR manufactured by T.A. Instruments is used as the thermogravimetric measuring apparatus. The content of the permeant is determined for the ten samples A, and the average value is calculated. The obtained average value is defined as the content of the permeant in the porous membrane.

(Bending degree)

Each term (density, total pore volume, permeability, and differential pore distribution) in the above formula for obtaining the bending degree is obtained by the following procedure. First, a portion of the porous membrane facing the electrode material is cut into a size of 20 mm in length $\times$ 5 mm in width to prepare a sample (sample B). Next, the sample B is measured under the following conditions using a mercury porosimeter, thereby obtaining the above items.

(Measurement conditions)

Mercury porosimeter: Autopore IV 9510, manufactured by Shimadzu Corporation
Pressure range for measurement: 4 psia ($\approx$ 27.6 kPa) or more and 60,000 psia ($\approx$ 414 MPa) or less
Pore distribution: 0.01 $\mu$m or more and 50 $\mu$m or less

(Electrolyte solution)

The electrolyte solution is an aqueous solution containing sulfuric acid. The electrolyte solution may be gelled as necessary.
The electrolyte solution may further contain at least one metal ion selected from the group consisting of Na ions, Li ions, Mg ions, and Al ions.
For example, a density of the electrolyte solution at 20°C is 1.10 or more. The density of the electrolyte solution at 20°C may be 1.35 or less. These densities are values for the electrolyte solution of the lead-acid battery in the full charge state.
Fig. 1 shows an appearance of an example of the lead-acid battery of the embodiment of the present invention. A lead-acid battery 1 includes a container 12 that stores an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.
The element 11 is configured by laminating a plurality of negative electrode plates 2 and a plurality of positive electrode plates 3 with a separator 4 interposed therebetween. At this point, the bag-shaped separator 4 storing the negative electrode plate 2 is shown, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.
Hereinafter, the PSOC cycle test will be described.
The PSOC life is evaluated based on the number of cycles until reaching the life in the following charge-discharge cycle test in accordance with JIS D 5306:2021.

The lead-acid battery in the full charge state and having a rated voltage of 12 V is placed in an air tank at 25°C throughout the entire test period. A wind velocity in the vicinity of the battery is 2.0 m/s or less. When the test is performed in a water bath, the battery is placed in a water bath at 40°C. A position of a water surface is in a range between 15 mm and 25 mm downward from an upper surface of the battery.

The lead-acid battery in the fully charged state having a rated voltage of 12 V is repeatedly discharged and charged under the following conditions.

(a) Discharge 1: discharge for 59 seconds $\pm$ 0.2 seconds at a current value of $I_D$ (A)
here, $I_D$ is calculated using the following conversion formula, and the first decimal place is rounded off.

$$I_D = 18.3\, I_{20}$$

(b) Discharge 2: discharge for 1.0 second $\pm$ 0.2 seconds at a current value of 300 A $\pm$ 1 A
(c) Charge: charge at 14.00 V $\pm$ 0.03 V with a limited current of 100.0 A $\pm$ 0.5 A for 60.0 seconds $\pm$ 0.3 seconds
(d) Repeat: repeating the above (a) to (c) as one cycle until the end of life. At this point, pausing for 40 to 48 hours is performed every 3600 cycles. The life is defined as the time when it is confirmed that the voltage at the time of the discharge during the test is lower than 7.2 V.
(e) In order to perform the test safely, a battery having a structure capable of adding water is added with purified water up to a maximum liquid level indicator before a liquid level falls below a minimum liquid level indicator.

The light-load life test will be described below.

The light-load life is evaluated based on the number of cycles until reaching the life in the following charge-discharge cycle test in accordance with JIS D 5301: 2019. However, for convenience, an ambient temperature of the test is changed from a 40°C liquid phase to a 75°C gas phase, and the time of 25 A discharge in a charge-discharge cycle is changed from 4 minutes to 2 minutes.

(a) A test battery is discharged at a discharge current of 25 A$\pm$0.1 A for 2 minutes in an environment of 75°C.
(b) Thereafter, the battery is charged at a charge voltage of 14.80 V (limiting current 25.0 A) for 10 minutes.
(c) (a) and (b) as one cycle are repeated 480 times. A pause of 40 to 60 hours is performed every 480 cycles, and then discharging is performed at a rated cold cranking ampere $I_{cc}$ for 30 seconds. The number of cycles at the time when the voltage at 30 seconds point after the start of discharge decreases to 7.2 V is defined as the number of life cycles. The rated cold cranking ampere $I_{cc}$ is a measure representing engine starting performance of the lead-acid battery, and refers to a discharge current at which an initial lead-acid battery is discharged at a temperature of -18 $\pm$ 1°C and the voltage at 30 seconds point after the start of discharge is 7.2 V or more.

Since the discharging with the rated cold cranking ampere $I_{cc}$ is performed every 480 cycles, the number of cycles at which the voltage at the 30 seconds point is 7.2 V may be obtained by linear interpolation from a graph in which the vertical axis is the voltage at the 30 seconds point in the $I_{cc}$ discharging and the horizontal axis is the number of cycles, and this may be used as the number of life cycles.

The matters described in the present specification can be predeterminately combined.

EXAMPLES

Hereinafter, the present invention will be specifically described based on examples, but the present invention is not limited to the following examples.

(Examples 1 to 18 and Comparative Examples 1 to 11)

(1) Preparation and evaluation of separator

A resin composition containing 100 parts by mass of polyethylene, 160 parts by mass of silica particles, 80 parts by mass of paraffin-based oil as a pore-forming additive, and 2 parts by mass of a permeant was extrusion-molded into a sheet shape, and stretched, and then a portion of the pore-forming additive was removed to obtain a porous membrane including a rib on one surface.

In the XRD spectrum of the porous membrane, the diffraction peak corresponding to the (110) plane of the crystalline region of polyethylene was observed in a range of $2\theta = 21.5°$ to $22.5°$, and the diffraction peak corresponding to the (200) plane was observed in a range of $2\theta = 23°$ to $24.5°$. The halo due to the amorphous region was broadly observed in a wide range of $2\theta = 17°$ to $27°$. The ratio R of the porous membrane was controlled as shown in Table 1 by the cooling rate of the sheet extrusion-molded and the ratio of the stretching treatment.

The oil content of the separator determined by the procedure described above was 11 to 18% by mass, and the content of the silica particles was 60% by mass. The height of the rib determined by the procedure described above was 0.6 mm. The thickness of the separator (thickness of the base) determined by the procedure described above was 0.2 mm.

The sheet-shaped separator obtained by the above procedure was folded in two so that the rib was disposed on the outer surface to form a bag. Next, the overlapped both ends were pressure-bonded to obtain a bag-shaped separator.

The ratio R of the porous membrane (F) in the separator, the oil content, the content of silica particles, the thickness of the separator, and the height of the rib are values obtained for the separator before the production of the lead-acid battery. These values are almost the same as the values measured by the procedure described above for the separator taken out from the produced lead-acid battery.

(2) Preparation of positive electrode plate

Lead oxide, a reinforcing material (synthetic resin fiber), water, and sulfuric acid were mixed to prepare a positive electrode paste. The positive electrode paste was filled in a mesh portion of an expanded grid made of an antimony-free Pb-Ca-Sn-based alloy, cured, and dried to obtain a non-formed positive electrode plate having a width of 100 mm, a height of 110 mm, and a thickness of 1.6 mm.

(3) Preparation of negative electrode plate

Lead oxide, bismuth sulfate ($Bi_2(SO_4)_3$), carbon black, barium sulfate, lignin, water, and sulfuric acid were mixed to prepare a negative electrode paste. The negative electrode paste was filled in a mesh portion of an expanded grid made of an antimony-free Pb-Ca-Sn-based alloy, cured, and dried to obtain a non-formed negative electrode plate having a width of 100 mm, a height of 110 mm, and a thickness of 1.3 mm. The amount of bismuth sulfate used was adjusted so that the content of the Bi element in the negative electrode plate taken out from the lead-acid battery in the full charge state was the value shown in Table 1 on a mass basis. The amounts of the carbon black, the barium sulfate, and the lignin used were adjusted so that the content of each component contained in the negative electrode plate taken out from the lead-acid battery in the full charge state was 0.3% by mass, 2.1% by mass, and 0.1% by mass, respectively.

(4) Preparation of lead-acid battery

The non-formed negative electrode plate was stored in a bag-shaped separator, and stacked with the positive electrode plate, and an element was formed of seven non-formed negative electrode plates and six non-formed positive electrode plates. The ratio of the mass of the positive electrode material to the mass of the negative electrode material: Mp/Mn was 1.2.

Lug portions of the positive electrode plates and lug portions of the negative electrode plates were welded to the positive electrode shelf and the negative electrode shelf by a cast-on strap (COS) method. The element was inserted into a polypropylene container, and filled with an electrolyte solution, and formation was performed in the container to assemble a flooded-type lead-acid battery having a rated voltage of 12 V and a 5-hour rate capacity of 30 Ah. Here, the 5-hour rate capacity is a discharge capacity when discharging is performed at the current (A) of 1/5 of the numerical value of Ah described in the rated capacity. In the container, six elements are connected in series.

As the electrolyte solution, an aqueous sulfuric acid solution was used. The density of the electrolyte solution after the formation at 20°C was 1.285.

Using the obtained lead-acid battery, the PSOC cycle test and the light-load life test were performed according to the procedure described above to evaluate the PSOC cycle life performance and the light-load life performance. Each life performance is evaluated by a relative value of the number of cycles N until the life is reached. The relative value of the number of cycles N is a value when the number of cycles N of the battery CA1 of Comparative Example 1 is 100. The results of batteries A1 to A18 and CA1 to CA11 of Examples 1 to 18 and Comparative Examples 1 to 11 are shown in Table 1.

[Table 1]

| Battery | Bi content (ppm) | Ratio R | PSOC cycle life | Light load life |
|---------|------------------|---------|-----------------|-----------------|
| CA1 | 50 | 0.40 | 100 | 100 |
| CA2 | 50 | 0.50 | 99 | 120 |
| CA3 | 50 | 1.0 | 100 | 130 |
| CA4 | 80 | 0.50 | 98 | 115 |

(continued)

| Battery | Bi content (ppm) | Ratio R | PSOC cycle life | Light load life |
|---|---|---|---|---|
| CA5 | 80 | 1.0 | 100 | 130 |
| CA6 | 100 | 0.40 | 113 | 90 |
| A1 | 100 | 0.50 | 113 | 113 |
| A2 | 100 | 0.60 | 114 | 125 |
| A3 | 100 | 0.70 | 115 | 125 |
| A4 | 100 | 0.80 | 116 | 127 |
| A5 | 100 | 0.90 | 116 | 129 |
| A6 | 100 | 1.0 | 117 | 130 |
| CA7 | 200 | 0.40 | 116 | 85 |
| A7 | 200 | 0.50 | 116 | 108 |
| A8 | 200 | 0.60 | 117 | 120 |
| A9 | 200 | 0.70 | 118 | 120 |
| A10 | 200 | 0.80 | 119 | 122 |
| A11 | 200 | 0.90 | 119 | 124 |
| A12 | 200 | 1.0 | 120 | 125 |
| CA8 | 300 | 0.40 | 119 | 80 |
| A13 | 300 | 0.50 | 119 | 103 |
| A14 | 300 | 0.60 | 120 | 115 |
| A15 | 300 | 0.70 | 121 | 115 |
| A16 | 300 | 0.80 | 122 | 117 |
| A17 | 300 | 0.90 | 122 | 119 |
| A18 | 300 | 1.0 | 123 | 120 |
| CA9 | 350 | 0.40 | 119 | 75 |
| CA10 | 350 | 0.50 | 122 | 90 |
| CA11 | 350 | 1.0 | 123 | 98 |

As shown in Table 1, when the content of the Bi element in the negative electrode material was 100 to 300 ppm and the ratio R was 0.50 or more, the PSOC life performance and the light-load life performance were significantly improved. In particular, when the ratio R is 0.60 or more, improvement in both life performances is remarkable.

(Examples 19 to 22)

Batteries A19 to A22 of Examples 19 to 22 were produced and evaluated similarly to Example 8 except that the Mp/Mn ratio was changed as shown in Table 2.

[Table 2]

| Battery | Bi content (ppm) | Ratio R | Mp/Mn | PSOC life | Light-load life |
|---|---|---|---|---|---|
| A19 | 200 | 0.5 | 1.1 | 110 | 106 |
| A7 | 200 | 0.5 | 1.2 | 116 | 108 |
| A20 | 200 | 0.5 | 1.3 | 117 | 115 |
| A21 | 200 | 0.5 | 1.4 | 117 | 113 |
| A22 | 200 | 0.5 | 1.5 | 111 | 103 |

As shown in Table 2, when the Mp/Mn ratio was 1.2 to 1.4, the light-load life performance was significantly improved.

INDUSTRIAL APPLICABILITY

The present disclosure is particularly applicable to a flooded-type lead-acid battery. The lead-acid battery according to the present disclosure is suitable as a lead-acid battery for a vehicle controlled by ISS. The lead-acid battery can also be suitably used for a power supply of an industrial energy storage apparatus such as an electric vehicle (such as a forklift) and the like. These applications are merely examples. The applications of the lead-acid battery according to the present invention are not limited thereto.

DESCRIPTION OF REFERENCE SIGNS

> 1: lead-acid battery
> 2: negative electrode plate
> 3: positive electrode plate
> 4: separator
> 5: positive electrode shelf
> 6: negative electrode shelf
> 7: positive pole
> 8: penetrating connection body
> 9: negative pole
> 11: element
> 12: container
> 13: partition
> 14: cell chamber
> 15: lid
> 16: negative electrode terminal
> 17: positive electrode terminal
> 18: vent plug

**Claims**

1. A lead-acid battery comprising:

   a positive electrode plate;
   a negative electrode plate;
   a separator interposed between the positive electrode plate and the negative electrode plate; and
   an electrolyte solution,
   wherein the positive electrode plate includes a positive electrode material,
   the negative electrode plate includes a negative electrode material,
   the negative electrode material includes a Bi element,
   a content of the Bi element in the negative electrode material is 100 ppm or more and 300 ppm or less on a mass basis,
   the separator includes a crystalline region and an amorphous region,
   a ratio R represented by $A_1/(A_1 + A_2)$ is 0.50 or more in an X-ray diffraction spectrum of the separator,
   $A_1$ is an area of a first diffraction peak having a maximum peak height among diffraction peaks corresponding to the crystalline region, and
   $A_2$ is an area of a second diffraction peak having a second highest peak height among the diffraction peaks corresponding to the crystalline region.

2. The lead-acid battery according to claim 1, wherein the ratio R is 0.60 or more.

3. The lead-acid battery according to claim 1, wherein the ratio R is 1.0 or less.

4. The lead-acid battery according to claim 1,

   wherein the separator includes polyolefin containing an ethylene unit,
   the first diffraction peak corresponds to a (110) plane of the crystalline region, and
   the second diffraction peak corresponds to a (200) plane of the crystalline region.

5. The lead-acid battery according to claim 1, wherein the separator has a thickness of 0.10 mm or more and 0.30 mm or less.

6. The lead-acid battery according to any one of claims 1 to 5, wherein a ratio of a mass of the positive electrode material to a mass of the negative electrode material is 1.2 or more and 1.4 or less.

7. The lead-acid battery according to any one of claims 1 to 5, which is used for a vehicle controlled by idling stop/start.

Fig. 1

## INTERNATIONAL SEARCH REPORT

International application No.

**PCT/JP2023/034796**

| A. | CLASSIFICATION OF SUBJECT MATTER |
|---|---|

*H01M 10/06*(2006.01)i; *H01M 4/14*(2006.01)i; *H01M 4/62*(2006.01)i; *H01M 50/417*(2021.01)i; *H01M 50/489*(2021.01)i
FI: H01M10/06 Z; H01M4/14 Q; H01M4/62 B; H01M50/417; H01M50/489

According to International Patent Classification (IPC) or to both national classification and IPC

| B. | FIELDS SEARCHED |
|---|---|

Minimum documentation searched (classification system followed by classification symbols)

H01M10/06; H01M4/14; H01M4/62; H01M50/417; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2021-163612 A (THE FURUKAWA BATTERY CO., LTD.) 11 October 2021 (2021-10-11)<br>paragraph [0018], examples 102, 103 | 1-7 |
| A | JP 2006-79973 A (MATSUSHITA ELECTRIC IND. CO., LTD.) 23 March 2006 (2006-03-23)<br>paragraphs [0015]-[0016], fig. 1 | 1-7 |
| A | WO 2021/210590 A1 (ASAHI KASEI KK) 21 October 2021 (2021-10-21)<br>claims 7-9, paragraphs [0124]-[0126] | 1-7 |
| P, A | WO 2022/255444 A1 (GS YUASA INTERNATIONAL LTD.) 08 December 2022 (2022-12-08)<br>claim 1 | 1-7 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/034796**

| Patent document cited in search report | | | Publication date (day/month/year) | Patent family member(s) | Publication date (day/month/year) |
|---|---|---|---|---|---|
| JP | 2021-163612 | A | 11 October 2021 | (Family: none) | |
| JP | 2006-79973 | A | 23 March 2006 | (Family: none) | |
| WO | 2021/210590 | A1 | 21 October 2021 | US 2022/0294076 A1 claims 7-9, paragraphs [0208]-[0218] EP 4050064 A1 CN 114207926 A KR 10-2022-0029698 A | |
| WO | 2022/255444 | A1 | 08 December 2022 | JP 2022-186310 A JP 2022-186312 A JP 2023-44442 A JP 2023-46061 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020067161 A
- JP 2017103044 A
- JP 2021163612 A
- JP 2006079973 A
- JP 2003142085 A